# DEMANDE DE BREVET EUROPEEN

(11) **EP 4 725 814 A1**
(43) Date de publication de la demande: **15.04.2026**
(21) Numéro de dépôt: 25200234.0
(22) Date de dépôt: 04.09.2025
(51) Int. Cl.: B62H 3/00, B62H 5/00

(54) **SYSTÈME AUTOMATIQUE DE STOCKAGE DE CYCLES, CYCLE ET POSTE DE VERROUILLAGE POUR UN TEL SYSTÈME**

(30) Priorité: 09.10.2024 FR 2410933
(71) Demandeur: JCDecaux SE, 92200 Neuilly-Sur-Seine (FR)
(72) Inventeur: ELAMBERT, Philippe, 92140 CLAMART (FR); HODEN, Cyril, 78950 GAMBAIS (FR)
(74) Mandataire: Plasseraud IP

(57) **Abrégé**

Système automatique de stockage de cycles comprenant :
- des cycles (1) comportant chacun un dispositif électrique et un organe de verrouillage (11) ayant un corps de verrouillage et un patin de contact électrique relié au dispositif électrique,
- des postes de verrouillage (7) adaptés pour recevoir chacun un cycle et incluant :
-- une structure incluant une gâche (9) ouverte selon une direction d'engagement (X) et définissant une zone de réception (10) adaptée pour recevoir l'organe de verrouillage d'un cycle par emboîtement dans la direction d'engagement,
-- un organe de blocage mobile pour sélectivement bloquer et débloquer le corps de verrouillage du cycle dans la gâche,
-- un circuit d'alimentation électrique ayant un premier pôle relié à un contact électrique disposé pour être en appui sur le patin de l'organe de verrouillage, et une deuxième borne reliée à la gâche, qui est électriquement conductrice et disposée pour être en contact avec le corps de verrouillage lorsque le cycle est verrouillé au poste de verrouillage, le corps de verrouillage étant électriquement conducteur.

## Description

### Domaine technique

La présente description est relative aux systèmes automatiques de stockage de cycles, aux cycles et aux postes de verrouillage pour de tels systèmes.

### Technique antérieure

Le document EP2639143A1, selon son abrégé, décrit un système automatique de stockage de cycles comprenant des postes de verrouillage qui incluent chacun une gâche adaptée pour recevoir un organe de verrouillage d'un cycle. La gâche est dotée de deux contacts électriques venant en appui sur des contacts de l'organe de verrouillage lorsque le cycle est verrouillé sur le poste de verrouillage.

Le document US2011148346A1, selon son abrégé, concerne un système de stockage de cycles comportant chacun une batterie reliée à des contacts électriques. Le système comporte en outre des structures d'accueil fixes sur lesquelles peuvent se verrouiller les cycles et comportant chacune une batterie reliée à une unité centrale électronique et à des contacts électriques. Les contacts électriques du cycle et de la structure d'accueil se connectent les uns aux autres lorsque le cycle est verrouillé sur la structure d'accueil, et la batterie du cycle recharge alors celle de la structure d'accueil.

### Résumé

La présente description a notamment pour but de proposer un système automatique de stockage de cycles amélioré.

A cet effet, la présente description propose un système automatique de stockage de cycles comprenant :
- une pluralité de cycles comportant chacun un dispositif électrique, chacun de ces cycles comportant en outre un organe de verrouillage ayant un corps de verrouillage et un patin de contact électrique relié au dispositif électrique du cycle,
- une pluralité de postes de verrouillage adaptés pour recevoir chacun un cycle,
- au moins un système de commande adapté pour commander les postes de verrouillage,

chaque poste de verrouillage incluant :
   -- une structure incluant une gâche ouverte selon une direction d'engagement et définissant une zone de réception adaptée pour recevoir l'organe de verrouillage d'un cycle par emboîtement dans ladite direction d'engagement,
   -- un organe de blocage mobile entre d'une part, une position verrouillée où ledit organe de blocage est adapté pour bloquer le corps de verrouillage du cycle dans la gâche et d'autre part, une position déverrouillée où l'organe de blocage est adapté pour permettre au corps de verrouillage du cycle d'entrer et sortir de la gâche dans la direction d'engagement,
   -- un mécanisme de commande adapté pour commander l'organe de blocage,
   -- un circuit d'alimentation électrique adapté pour alimenter électriquement le dispositif électrique du cycle lorsque l'organe de verrouillage du cycle est bloqué dans la gâche du poste de verrouillage, le circuit d'alimentation électrique ayant un premier pôle et un deuxième pôle, le premier pôle étant relié électriquement à un contact électrique disposé pour être en appui sur le patin de l'organe de verrouillage lorsque le cycle est verrouillé au poste de verrouillage,
dans lequel la gâche est électriquement conductrice et est reliée électriquement au deuxième pôle du circuit d'alimentation électrique , ladite gâche étant disposée pour être en contact avec le corps de verrouillage lorsque le cycle est verrouillé au poste de verrouillage, ledit corps de verrouillage étant électriquement conducteur et relié au dispositif électrique du cycle de façon que ledit dispositif électrique du cycle soit alimenté électriquement par l'intermédiaire dudit patin et dudit corps de verrouillage lorsque le cycle est verrouillé au poste de verrouillage.

Grâce à ces dispositions, on met à profit la connexion mécanique entre le corps de verrouillage et la gâche pour réaliser également la connexion électrique du dispositif électrique du cycle avec le deuxième pôle de la source d'énergie électrique, ce qui élimine le besoin d'un des patins de contact électrique sur l'organe de verrouillage et d'un des contacts électriques sur le poste de verrouillage pour réaliser cette connexion électrique. La réalisation du système automatique de stockage de cycles est donc simplifiée.

De plus, comme l'organe de verrouillage du cycle comporte un patin de contact électrique de moins, le patin de contact électrique restant peut éventuellement s'étendre sur une plus grande surface pour fiabiliser le contact électrique avec le contact électrique du poste de verrouillage, de façon à réaliser la connexion électrique malgré de possibles défauts de positionnement du cycle lors de son verrouillage sur le poste de verrouillage.

En outre, comme l'organe de verrouillage du cycle comporte un patin de contact électrique de moins et le poste de verrouillage un contact électrique de moins, la surface ainsi dégagée à l'interface entre la gâche et l'organe de verrouillage du cycle peut éventuellement être mise à profit pour accueillir une ou plusieurs fonction(s) technique(s) supplémentaire(s).

Dans des modes de réalisation du système automatique de stockage de cycles, on peut éventuellement avoir recours en outre à l'une et/ou à l'autre des dispositions suivantes (seules ou dans toutes leurs combinaisons mutuelles) :
- l'organe de blocage est également électriquement conducteur et est relié électriquement au deuxième pôle du circuit d'alimentation électrique.
- le corps de verrouillage présente une face externe qui est disposée vers le poste de verrouillage lorsque le cycle est verrouillé audit poste de verrouillage, ladite face externe s'étendant sur une certaine largeur perpendiculairement à la direction d'engagement, et le patin de l'organe de verrouillage s'étendant sur une majeure partie de ladite largeur.
- le patin de l'organe de verrouillage est porté par une semelle électriquement isolante qui est fixée au corps de verrouillage.
- le contact électrique fait saillie dans ladite zone de réception et est sollicité élastiquement vers ladite zone de réception.
- le contact électrique est porté par un support électriquement isolant fixé à la gâche.
- la gâche comporte une interface de communication radio courte portée et l'organe de verrouillage du cycle comporte un dispositif de communication radio qui est disposé en décalé par rapport au patin de façon à communiquer avec l'interface de communication radio courte portée sans être gêné par le patin lorsque le cycle est verrouillé au poste de verrouillage.
- la gâche comporte une interface de communication radio courte portée et l'organe de verrouillage du cycle comporte un dispositif de communication radio qui est disposé en décalé par rapport au patin de façon à communiquer avec l'interface de communication radio courte portée sans être gêné par le patin lorsque le cycle est verrouillé au poste de verrouillage, le patin est porté par une semelle électriquement isolante qui est fixée au corps de verrouillage et qui recouvre le dispositif de communication radio vers l'extérieur de l'organe de verrouillage, ladite semelle électriquement isolante étant perméable aux ondes radio, et le contact électrique est porté par un support électriquement isolant qui est fixé à la gâche et qui recouvre l'interface de communication radio courte portée vers la zone de réception définie par la gâche, ledit support électriquement isolant étant perméable aux ondes radio.

Selon un autre aspect, un cycle pour un système tel que défini ci-dessus comprend un dispositif électrique, un organe de verrouillage ayant un corps de verrouillage et un patin de contact électrique relié au dispositif électrique du cycle, l'organe de verrouillage étant adapté pour s'engager selon une direction d'engagement dans une zone de réception d'une gâche appartenant à un poste de verrouillage, ledit corps de verrouillage étant électriquement conducteur et relié au dispositif électrique du cycle de façon que ledit dispositif électrique du cycle puisse être alimenté électriquement par l'intermédiaire dudit patin et dudit corps de verrouillage lorsque le cycle est verrouillé au poste de verrouillage.

Dans des modes de réalisation du cycle, on peut éventuellement avoir recours en outre à l'une et/ou à l'autre des dispositions suivantes (seules ou dans toutes leurs combinaisons mutuelles) :
- le corps de verrouillage présente une face externe qui est disposée vers le poste de verrouillage lorsque le cycle est verrouillé audit poste de verrouillage, ladite face externe s'étendant sur une certaine largeur perpendiculairement à la direction d'engagement, et le patin de l'organe de verrouillage s'étendant sur une majeure partie de ladite largeur.
- le patin de l'organe de verrouillage est porté par une semelle électriquement isolante qui est fixée au corps de verrouillage.
- l'organe de verrouillage du cycle comporte un dispositif de communication radio qui est décalé par rapport au patin selon la direction d'engagement et qui est recouvert par la semelle électriquement isolante vers l'extérieur de l'organe de verrouillage, ladite semelle électriquement isolante étant perméable aux ondes radio.

Selon un autre aspect, un poste de verrouillage pour un système tel que défini ci-dessus comprend une structure incluant une gâche ouverte selon une direction d'engagement et définissant une zone de réception adaptée pour recevoir un organe de verrouillage d'un cycle par emboîtement dans ladite direction d'engagement; un organe de blocage mobile entre d'une part, une position verrouillée où ledit organe de blocage est adapté pour bloquer l'organe de verrouillage du cycle dans la gâche et d'autre part, une position déverrouillée où l'organe de blocage est adapté pour permettre à l'organe de verrouillage du cycle d'entrer et sortir de la gâche dans la direction d'engagement; un mécanisme de commande adapté pour commander l'organe de blocage; un circuit d'alimentation électrique adapté pour alimenter électriquement le cycle lorsque l'organe de verrouillage du cycle est bloqué dans la gâche du poste de verrouillage, le circuit d'alimentation électrique ayant un premier pôle et un deuxième pôle, le premier pôle étant relié électriquement à un contact électrique disposé pour être en appui sur un patin de l'organe de verrouillage lorsque le cycle est verrouillé au poste de verrouillage, dans lequel la gâche est électriquement conductrice et est reliée électriquement au deuxième pôle du circuit d'alimentation électrique, la gâche étant disposée pour être en contact avec l'organe de verrouillage lorsque le cycle est verrouillé au poste de verrouillage.

Dans des modes de réalisation du poste de verrouillage, on peut éventuellement avoir recours en outre à l'une et/ou à l'autre des dispositions suivantes (seules ou dans toutes leurs combinaisons mutuelles) :
- l'organe de blocage est également électriquement conducteur et est relié électriquement au deuxième pôle du circuit d'alimentation électrique.
- le contact électrique fait saillie dans ladite zone de réception et est sollicité élastiquement vers ladite zone de réception.
- le contact électrique est porté par un support électriquement isolant fixé à la gâche.
- la gâche comporte une interface de communication radio courte portée, le support électriquement isolant recouvrant l'interface de communication radio courte portée vers la zone de réception définie par la gâche, ledit support électriquement isolant étant perméable aux ondes radio.

### Brève description des dessins

D'autres caractéristiques et avantages de apparaîtront au cours de la description suivante d'une de ses formes de réalisation, donnée à titre d'exemple non limitatif, en regard des dessins joints.

Sur les dessins :
**Fig. 1**

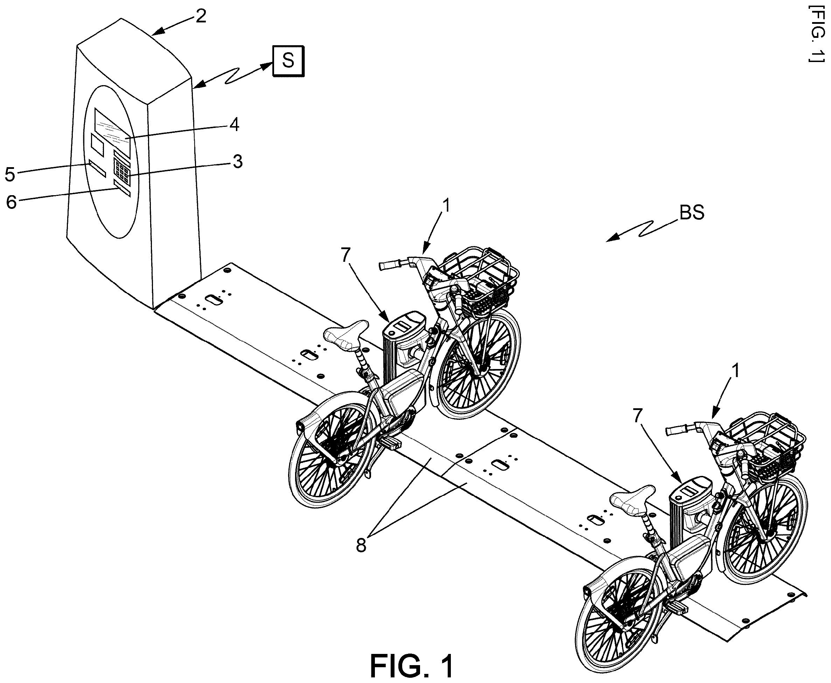

   [Fig. 1] la figure 1 est une vue schématique en perspective montrant une station d'un système automatique de stockage de cycles selon une forme de réalisation,
**Fig. 2**

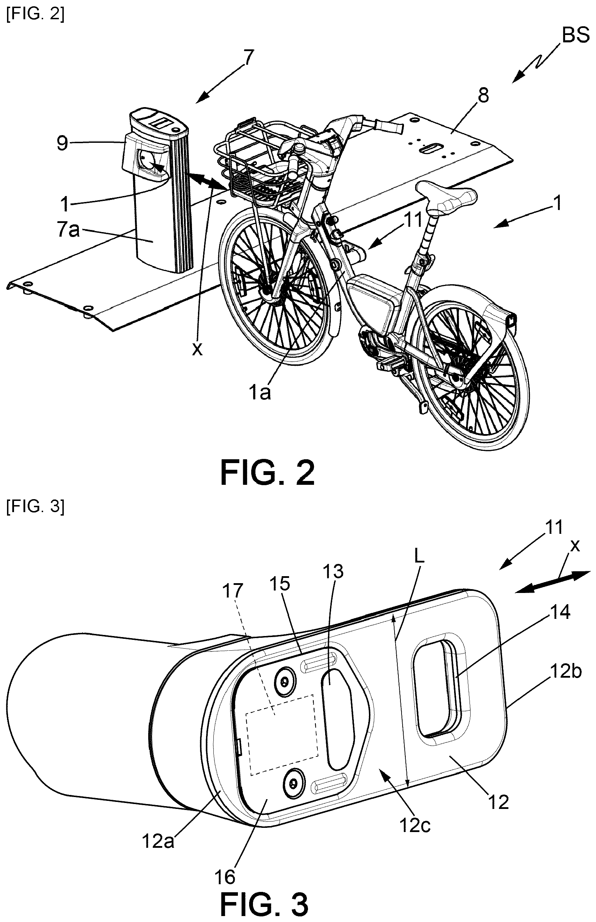

   [Fig. 2] la figure 2 est une vue de détail en perspective montrant le verrouillage en cours d'un cycle sur l'un des postes de verrouillage de la station de la figure 1,
**Fig. 3**
   [Fig. 3] la figure 3 est une vue de détail en perspective montrant la gâche du poste de verrouillage de la figure 2,
**Fig. 4**

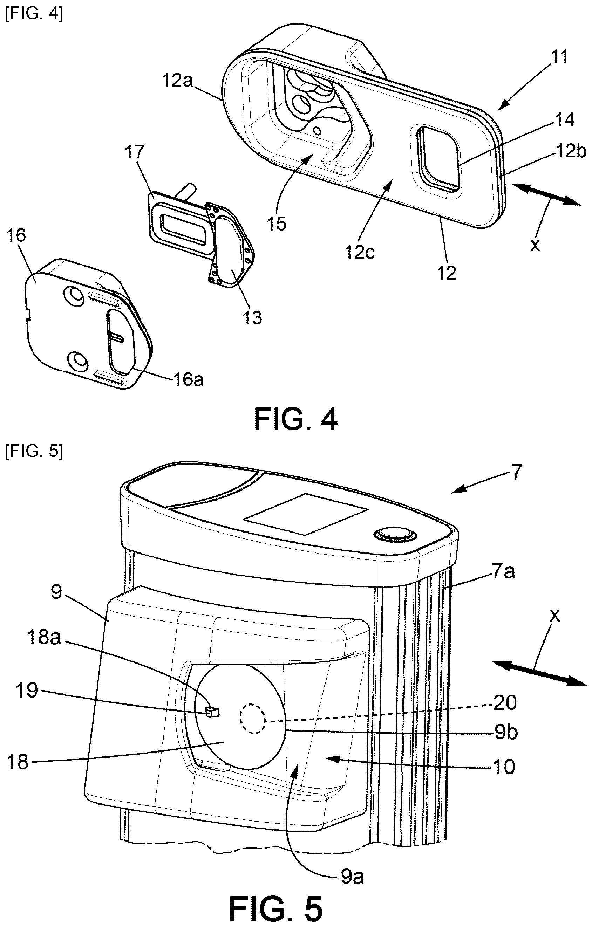

   [Fig. 4] la figure 4 est une vue de détail en perspective de l'organe de verrouillage du cycle de la figure 2,
**Fig. 5**
   [Fig. 5] la figure 5 est une vue éclatée de l'organe de verrouillage de la figure 4,
**Fig. 6**

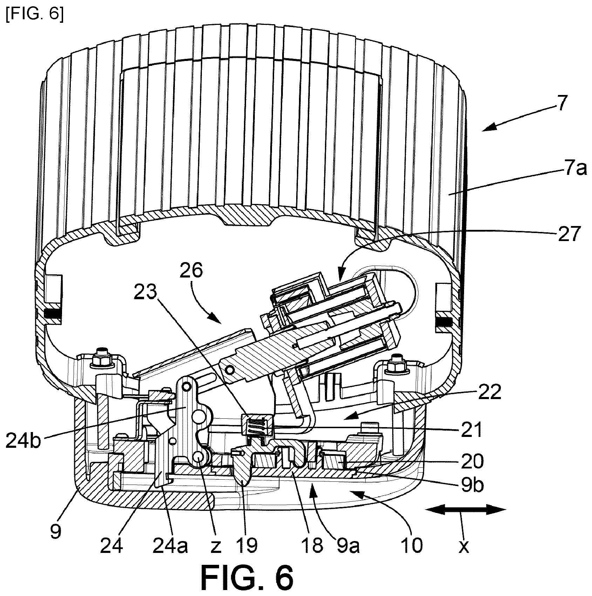

   [Fig. 6] la figure 6 est une coupe horizontale de poste de verrouillage de la figure 3 au niveau de sa gâche,
**Fig. 7**

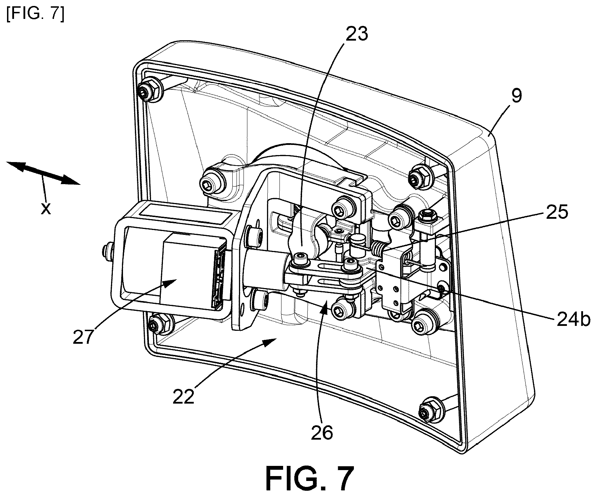

   [Fig. 7] la figure 7 est une vue de détail en perspective montrant le mécanisme de verrouillage situé à l'intérieur du poste de verrouillage au niveau de la gâche,
**Fig. 8**

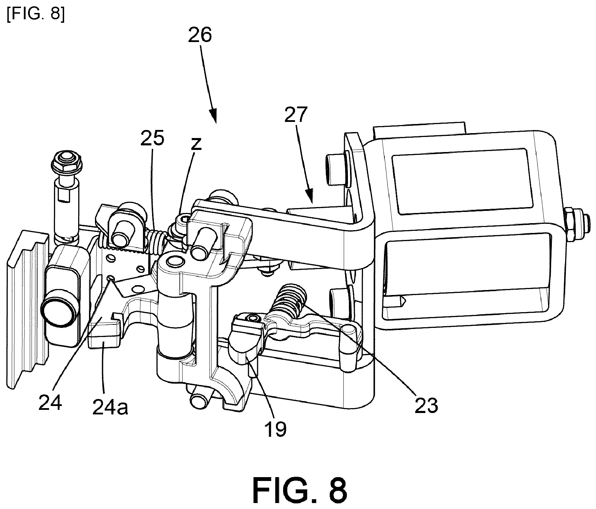

   [Fig. 8] la figure 8 est une vue de détail en perspective montrant le mécanisme de verrouillage seul,
**Fig. 9**

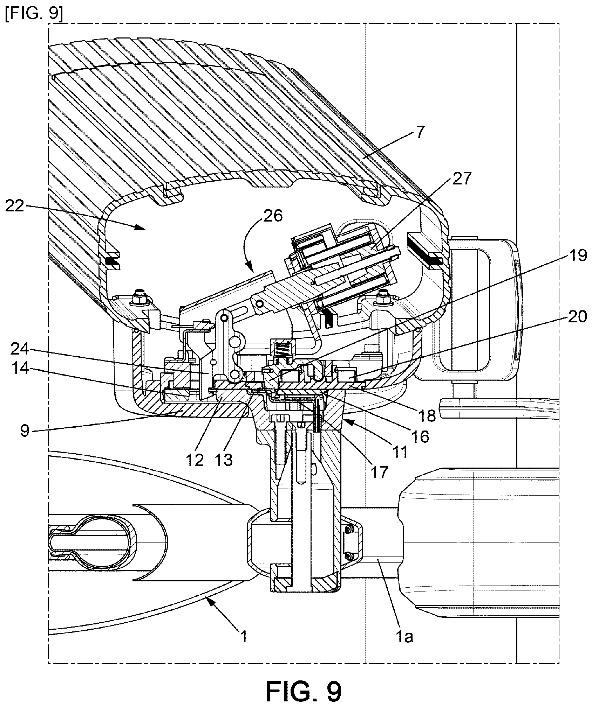

   [Fig. 9] la figure 9 est une vue en coupe horizontale similaire à la figure 6, montrant le cycle verrouillé sur le poste de verrouillage, et
**Fig. 10**

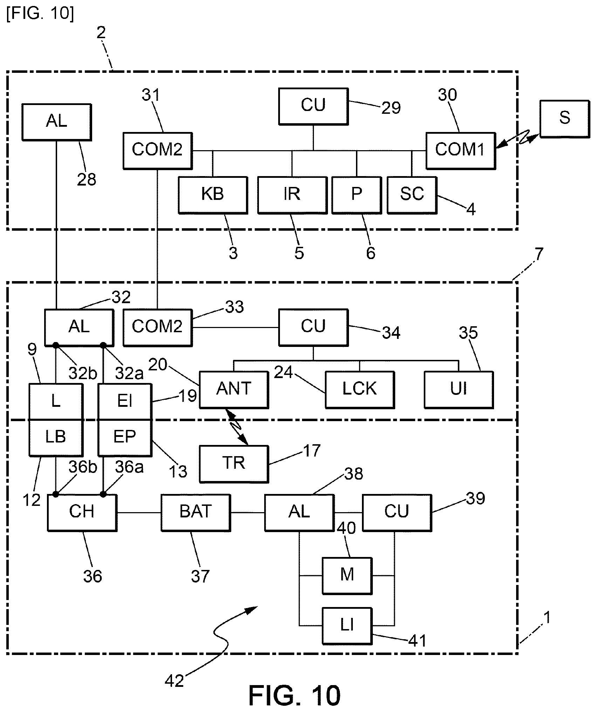

   [Fig. 10] la figure 10 est un schéma bloc d'une partie du système de stockage de cycles.

### Description plus détaillée

Sur les différentes figures, les mêmes références désignent des éléments identiques ou similaires.

Comme représenté sur la figure 1, la présente description concerne un système automatique de stockage de cycles 1 tels que notamment des bicyclettes, permettant par exemple de stocker des cycles 1 sur la voie publique de façon à les mettre à disposition du public.

Ce système automatique de stockage de cycles 1 peut comporter plusieurs stations BS de stockage de cycles, dont une est représentée sur la figure 1. Chaque station BS de stockage de cycles comprend un poste central de station 2, qui peut par exemple se présenter sous la forme d'une borne interactive dotée d'une interface utilisateur comprenant par exemple un clavier 3, un écran 4, un lecteur 5 de cartes portatives électroniques, un dispositif 6 d'impression de tickets, etc.

Les cycles 1 ou au moins certains des cycles 1 comportent chacun un dispositif électrique qui sera détaillé plus loin.

Le poste central de station 2 communique d'une part, avec un serveur central S qui gère les abonnements et les locations de cycles 1, et d'autre part, avec une pluralité de postes de verrouillage 7 qui permettent de verrouiller les cycles 1 pendant leur stockage et qui peuvent par exemple se présenter sous la forme de bornes de verrouillage fixées au sol sur la voie publique.

Les postes de verrouillage 7, et éventuellement le poste central de station 2, peuvent être montées sur une ou des platines métalliques 8 fixées au sol sans excavation, qui peuvent assurer également le passage de câbles entre le poste central de station 2 et les postes de verrouillage 7.

Comme on peut le voir sur la figure 2, chaque poste de verrouillage 7 comporte une gâche 9 formant un boîtier rigide qui fait partie de la structure 7a du poste de verrouillage 7. La gâche 9 définit une zone de réception 10 ouverte horizontalement dans une direction d'engagement X et est adaptée pour recevoir et retenir un organe de verrouillage 11 solidaire par exemple du cadre 1a du cycle 1. La direction d'engagement X peut avantageusement être parallèle au sol, donc généralement sensiblement horizontale, de sorte que le cycle 1 peut être verrouillé sur le poste de verrouillage 7 en faisant rouler le cycle 1 sur le sol selon la direction d'engagement X, vers l'avant dans la direction d'avancement normale du cycle, pour emboîter l'organe de verrouillage 11 dans la zone de réception 10 définie par la gâche 9.

Comme représenté sur les figures 3 et 4, l'organe de verrouillage 11 a un corps de verrouillage 12 et un patin 13 de contact électrique relié au dispositif électrique du cycle 1. Le corps de verrouillage 12 est réalisé partiellement ou en totalité en matériau conducteur rigide, par exemple en métal, notamment en acier. Le corps de verrouillage 12 peut se présenter sous la forme d'une platine disposée dans un plan vertical en position normale d'utilisation du cycle, et s'étendre entre une extrémité arrière 12a fixée au cadre 1a du cycle, et une extrémité avant 12b libre. Le corps de verrouillage 12 présente une face externe 12c disposée à l'opposé du cadre 1a du cycle, c'est-à-dire vers le poste de verrouillage 7 lorsque le cycle 1 est verrouillé sur le poste de verrouillage 7. Le corps de verrouillage 12 peut comporter un évidement 14 vers son extrémité avant, pour recevoir un organe de blocage appartenant au poste de verrouillage 7, comme il sera expliqué ci-après. Le corps de verrouillage 12 peut comporter en outre un logement 15 vers son extrémité arrière 12a, lequel logement est ouvert au niveau de la face externe 12c.

La face externe 12c s'étend sur une certaine largeur L perpendiculairement à la direction d'engagement X, et le patin 13 peut s'étendre sur une majeure partie de ladite largeur L, par exemple sur au moins les deux tiers de ladite largeur L.

Le patin 13 de l'organe de verrouillage est en matériau conducteur et est isolé du corps de verrouillage 12. Par exemple, le patin 13 peut être porté par une semelle 16 électriquement isolante qui est fixée au corps de verrouillage 12 par des vis ou autres. Par exemple, la semelle 16 peut être montée dans le logement 15 en obturant ledit logement 15 au niveau de la face externe 12c, avantageusement avec étanchéité. La semelle 16 peut être réalisée par exemple en matière plastique, ou autre matériau isolant perméable aux ondes radio.

La semelle 16 peut comporter une ouverture 16a dans laquelle est monté le patin 13 de façon que le patin 13 soit exposé au niveau de la face externe 12c du corps de verrouillage. Avantageusement, le patin 13 obture l'ouverture 16a avec étanchéité.

L'organe de verrouillage 11 peut en outre comporter un dispositif de communication radio 17, par exemple un transpondeur, notamment un transpondeur RFID. Le dispositif de communication radio 17 est disposé dans le logement 15 et est recouvert par la semelle isolante 16 vers l'extérieur de l'organe de verrouillage. Le dispositif de communication radio 17 est décalé par rapport au patin 13 de façon que le patin 13 ne recouvre pas le dispositif de communication radio 17 vers le poste de verrouillage 7 lorsque le cycle 1 est verrouillé sur le poste de verrouillage. Par exemple, le dispositif de communication radio 17 peut être décalé par rapport au patin 13 vers l'arrière du patin 13 dans la direction d'engagement X.

Comme représenté sur la figure 5, la gâche 9 comporte une face de réception 9a qui est disposée en regard de la face externe 12a du corps de verrouillage 12 lorsque le cycle 1 est verrouillé sur le poste de verrouillage 7.

La face de réception 9a est pourvue d'un évidement 9b, qui est obturé, avantageusement avec étanchéité, par un support électriquement isolant 18 fixé à ladite gâche 9. La gâche 9 est quant à elle réalisée partiellement ou en totalité en matériau électriquement conducteur, par exemple en métal, notamment en acier. De cette façon, la gâche 9, ou au moins une partie de la gâche 9, est en contact électrique le corps de verrouillage 12 lorsque le cycle 1 est verrouillé au poste de verrouillage 7.

Le support électriquement isolant 18 porte un contact électrique 19 qui est exposé dans la zone de réception 10 et qui est disposé pour venir en contact avec le patin13 lorsque le cycle 1 est verrouillé au poste de verrouillage.

Le contact électrique 19 peut traverser un orifice 18a ménagé dans le support électriquement isolant 18, de façon à faire saillie dans l'espace de réception 10.

La gâche 9 peut en outre comporter une interface de communication radio courte portée 20, par exemple une antenne radio, disposée à proximité du dispositif de communication radio 17 de l'organe de verrouillage 11 pour communiquer avec celui-ci lorsque le cycle 1 est verrouillé au poste de verrouillage 7.

Le support électriquement isolant 18 recouvre l'interface de communication radio courte portée 20 vers la zone de réception 10 définie par la gâche, ledit support électriquement isolant étant perméable aux ondes radio. Avantageusement, l'interface de communication radio courte portée 20 peut être fixée sur la face interne du support électriquement isolant 18, par exemple par clipsage.

Le contact électrique 19 peut être sollicité élastiquement vers la zone de réception 10, par exemple à l'aide d'un ressort 21 disposé dans l'espace intérieur 22 recouvert par le support électriquement isolant 18, lequel ressort 21 peut prendre appui sur une bride 23 isolée électriquement de la gâche (voir figures 6 et 7).

Comme représenté sur les figures 6 à 8, le poste de verrouillage 7 comporte en outre un organe de blocage 24 mobile entre d'une part, une position verrouillée où ledit organe de blocage est adapté pour bloquer le corps de verrouillage 12 du cycle 1 dans la gâche 9 et d'autre part, une position déverrouillée où l'organe de blocage 24 est adapté pour permettre au corps de verrouillage 12 du cycle d'entrer et sortir de la gâche dans la direction d'engagement X.

L'organe de blocage 24 est normalement maintenu élastiquement dans la position verrouillée, représentée sur les dessins, où ledit organe de blocage fait saillie dans l'espace de réception 10. Ce maintien élastique peut être réalisé par exemple par un ressort 25 (figure 7). Le mouvement de l'organe de blocage entre la position verrouillée et la position déverrouillée peut par exemple être un mouvement pivotant autour d'un axe vertical Z solidaire de la gâche 9.

L'organe de blocage 24 peut comporter une surface de came 24a contre laquelle bute l'extrémité avant 12b du corps de verrouillage 12 lorsque ledit corps de verrouillage est engagé dans la gâche 9. Par effet de came, l'extrémité avant 12b du corps de verrouillage repousse ainsi l'organe de blocage 24 vers l'espace intérieur 22 en permettant l'engagement complet du corps de verrouillage 12, après quoi l'organe de blocage 24 peut revenir en position de verrouillage sous l'effet du ressort 25, en s'engageant dans l'évidement 14.

L'organe de blocage 24 est commandé par un mécanisme de commande 26 qui comprend par exemple un vérin 27 relié à mouvement perdu avec un doigt de commande 24b de l'organe de blocage 24, pour déplacer l'organe de blocage en position déverrouillée par exemple pendant une durée prédéterminée, sur ordre d'un système de commande, lors de la libération d'un cycle pris par un utilisateur.

Comme représenté schématiquement sur la figure 9, lorsque le cycle 1 est verrouillé au poste de verrouillage 7, l'organe de verrouillage 11 du cycle est engagé dans la gâche 9 du poste de verrouillage, l'organe de blocage 24 étant engagé dans l'évidement 14 du corps de verrouillage 12. Dans cette position, le contact électrique 19 du poste de verrouillage est en appui sur le patin 13 de contact électrique de l'organe de verrouillage, tandis que la gâche est en contact électrique avec le corps de verrouillage 12. De plus, l'interface de communication radio courte portée 20 est alors à proximité du dispositif de communication radio 17 et en communication avec celui-ci, notamment pour que l'interface de communication radio courte portée 20 puisse interroger le dispositif de communication radio 17 et recevoir de celui-ci un identifiant du cycle 1.

Comme représenté sur la figure 10, le poste central de station 2 peut comporter une alimentation électrique 28 (AL) et une unité centrale 29 (CU) tel qu'un microcontrôleur ou similaire, qui commande différents dispositifs de la borne interactive 2, notamment les éléments susmentionnés tels que le clavier 3 (KB), l'écran 4 (SC), le lecteur de carte 5 (CR) et le dispositif 6 d'impression de tickets (P), ainsi que, par exemple, une interface de communication 30 (COM1) adaptée pour communiquer avec le serveur S susmentionné et une interface de communication 31 (COM2) adaptée pour communiquer avec les postes de verrouillage 7 de la station BS.

Chaque poste de verrouillage 7 peut comporter une alimentation électrique 32 (AL) alimentée par exemple par l'alimentation électrique 28 de la borne interactive 2.

Chaque poste de verrouillage 7 peut comporter également une interface de communication 33 (COM2) adaptée à faire communiquer l'unité centrale 29 du poste central de station 2 avec une unité centrale 34 (CU - microcontrôleur ou autre) du poste de verrouillage. Cette unité centrale 34 peut commander notamment l'interface de communication radio courte portée 20 (ANT), le vérin 27 (LCK) du mécanisme de commande 26, éventuellement une interface utilisateur 35 (UI) comprenant par exemple un lecteur sans contact et/ou un bouton de commande pour commander ou confirmer localement le déverrouillage du cycle 1.

Le cycle 1 comporte un dispositif électrique 42 comportant un chargeur 36 (CH) adapté pour alimenter une batterie 37 (BAT) reliée à une alimentation électrique 38 (AL). L'alimentation électrique 38 est adaptée pour alimenter une unité centrale 39 (CU) telle qu'un microcontrôleur ou autre, ainsi que notamment un moteur 40 (M) et un éclairage 41 (LI) qui sont commandés par l'unité centrale 39.

La sortie de l'alimentation électrique 32 du poste de verrouillage 7 comporte un premier pôle 32a (par exemple un pôle + en cas d'alimentation à courant continu) et un deuxième pôle 32b (par exemple un pôle - en cas d'alimentation à courant continu) qui sont reliés respectivement au contact électrique 19 et à la gâche 9.

L'entrée du chargeur 36 du cycle 1 comporte un premier pôle 36a (par exemple un pôle + en cas d'alimentation à courant continu) et un deuxième pôle 36b (par exemple un pôle - en cas d'alimentation à courant continu) qui sont reliés respectivement au patin 13 de contact électrique et au corps de verrouillage 12.

Lorsque le cycle 1 est verrouillé sur le poste de verrouillage 7, le corps de verrouillage 12 du cycle est en contact électrique avec la gâche 9 et la patin 13 du cycle est en contact électrique avec le contact électrique 19, de sorte que le premier pôle 32a de la sortie de l'alimentation 32 est relié électriquement au premier pôle 36a de l'entrée du chargeur 36, tandis que le deuxième pôle 32b de la sortie de l'alimentation 32 est relié électriquement au deuxième pôle 36b de l'entrée du chargeur 36.

Eventuellement, l'organe de blocage 24, métallique et électriquement conducteur, peut être relié électriquement au deuxième pôle 32b de la sortie de l'alimentation 32 et contribuer ainsi à la connexion électrique de ce deuxième pôle 32b au deuxième pôle 36b du chargeur 36, par contact entre l'organe de blocage 24 et le corps de verrouillage 12.

Grâce aux dispositions précédemment décrites, on met à profit la connexion mécanique entre le corps de verrouillage 12 et la gâche 9, plus éventuellement la connexion mécanique entre l'organe de verrouillage 12 et l'organe de blocage 24, pour réaliser également la connexion électrique du dispositif électrique 42 du cycle avec le deuxième pôle 32b de l'alimentation électrique 32, ce qui permet de n'utiliser qu'un seul patin 13 de contact électrique sur l'organe de verrouillage 11 et un seul contact électrique 19 sur le poste de verrouillage. La réalisation du système automatique de stockage de cycles est donc simplifiée, le patin 13 de contact électrique peut être réalisé avec une plus grande surface pour rendre la connexion électrique plus sûre même en cas de positionnement imparfait du cycle 1 par rapport au poste de verrouillage, et il est possible de loger les moyens de communication radio (dispositif de communication radio 17 et interface de communication radio courte portée 20) respectivement dans l'organe de verrouillage 11 à côté du patin 13 de contact et dans la gâche 9 à côté du contact électrique 19.

### Nomenclature :

station BS
serveur S
direction d'engagement X
largeur L
axe Z
cycle 1
cadre 1a
poste central de station 2
clavier 3
écran 4
lecteur 5 de cartes portatives électroniques
dispositif 6 d'impression de tickets
poste de verrouillage 7
structure 7a du poste de verrouillage
platine 8
gâche 9
face de réception 9a
zone de réception 10
organe de verrouillage 11
corps de verrouillage 12
extrémité arrière 12a
extrémité avant 12b
face externe 12c
patin 13 de contact électrique
évidement 14
logement 15
semelle 16 électriquement isolante
ouverture 16a
dispositif de communication radio 17
support électriquement isolant 18
contact électrique 19
interface de communication radio courte portée 20
ressort 21
espace intérieur 22
bride 23
organe de blocage 24
surface de came 24a
doigt de commande 24b
ressort 25
mécanisme de commande 26
vérin 27
alimentation électrique 28
unité centrale 29
interface de communication 30
interface de communication 31
alimentation électrique 32
interface de communication 33
unité centrale 34
interface utilisateur 35
chargeur 36
batterie 37
alimentation électrique 38
unité centrale 39
moteur 40
éclairage 41
dispositif électrique 42

## Revendications

1. Système automatique de stockage de cycles (1) comprenant :
- une pluralité de cycles (1) comportant chacun un dispositif électrique (42), chacun de ces cycles (1) comportant en outre un organe de verrouillage (11) ayant un corps de verrouillage (12) et un patin (13) de contact électrique relié au dispositif électrique (42) du cycle,
- une pluralité de postes de verrouillage (7) adaptés pour recevoir chacun un cycle (1),
- au moins un système de commande (2, S) adapté pour commander les postes de verrouillage (7),
chaque poste de verrouillage (7) incluant :
-- une structure incluant une gâche (9) ouverte selon une direction d'engagement (X) et définissant une zone de réception (10) adaptée pour recevoir l'organe de verrouillage (11) d'un cycle (1) par emboîtement dans ladite direction d'engagement (X),
-- un organe de blocage (24) mobile entre d'une part, une position verrouillée où ledit organe de blocage (24) est adapté pour bloquer le corps de verrouillage (12) du cycle dans la gâche (9) et d'autre part, une position déverrouillée où l'organe de blocage (24) est adapté pour permettre au corps de verrouillage (12) du cycle d'entrer et sortir de la gâche (9) dans la direction d'engagement (X),
-- un mécanisme de commande (26) adapté pour commander l'organe de blocage (24),
-- un circuit d'alimentation électrique (32) adapté pour alimenter électriquement le dispositif électrique (42) du cycle lorsque l'organe de verrouillage (11) du cycle est bloqué dans la gâche (9) du poste de verrouillage, le circuit d'alimentation électrique (32) ayant un premier pôle (32a) et un deuxième pôle (32b), le premier pôle (32a) étant relié électriquement à un contact électrique (19) disposé pour être en appui sur le patin (13) de l'organe de verrouillage (11) lorsque le cycle (1) est verrouillé au poste de verrouillage (7),
dans lequel la gâche (9) est électriquement conductrice et est reliée électriquement au deuxième pôle (32b) du circuit d'alimentation électrique (32), ladite gâche étant disposée pour être en contact avec le corps de verrouillage (12) lorsque le cycle (1) est verrouillé au poste de verrouillage (7), ledit corps de verrouillage (12) étant électriquement conducteur et relié au dispositif électrique (42) du cycle de façon que ledit dispositif électrique du cycle soit alimenté électriquement par l'intermédiaire dudit patin (13) et dudit corps de verrouillage (12) lorsque le cycle (1) est verrouillé au poste de verrouillage (7).

2. Système automatique de stockage de cycles (1) selon la revendication 1, dans lequel l'organe de blocage (24) est également électriquement conducteur et est relié électriquement au deuxième pôle (32b) du circuit d'alimentation électrique (32).

3. Système automatique de stockage de cycles (1) selon l'une quelconque des revendications précédentes, dans lequel le corps de verrouillage (12) présente une face externe (12c) qui est disposée vers le poste de verrouillage (7) lorsque le cycle (1) est verrouillé audit poste de verrouillage (7), ladite face externe (12c) s'étendant sur une certaine largeur (L) perpendiculairement à la direction d'engagement (X), et le patin (13) de l'organe de verrouillage s'étendant sur une majeure partie de ladite largeur (L).

4. Système automatique de stockage de cycles (1) selon l'une quelconque des revendications précédentes, dans lequel le patin (13) de l'organe de verrouillage est porté par une semelle (16) électriquement isolante qui est fixée au corps de verrouillage (12).

5. Système automatique de stockage de cycles (1) selon l'une quelconque des revendications précédentes, dans lequel ledit contact électrique (19) fait saillie dans ladite zone de réception (10) et est sollicité élastiquement vers ladite zone de réception.

6. Système automatique de stockage de cycles (1) selon l'une quelconque des revendications précédentes, dans lequel ledit contact électrique (19) est porté par un support électriquement isolant (18) fixé à la gâche (9).

7. Système automatique de stockage de cycles (1) selon l'une quelconque des revendications précédentes, dans lequel la gâche (9) comporte une interface de communication radio courte portée (20) et l'organe de verrouillage (11) du cycle comporte un dispositif de communication radio (17) qui est disposé en décalé par rapport au patin (13) de façon à communiquer avec l'interface de communication radio courte portée (20) sans être gêné par la patin (13) lorsque le cycle est verrouillé au poste de verrouillage.

8. Système automatique de stockage de cycles (1) selon l'une quelconque des revendications 1 à 3, dans lequel la gâche (9) comporte une interface de communication radio courte portée (20) et l'organe de verrouillage (11) du cycle comporte un dispositif de communication radio (17) qui est disposé en décalé par rapport au patin (13) de façon à communiquer avec l'interface de communication radio courte portée (20) sans être gêné par la patin (13) lorsque le cycle est verrouillé au poste de verrouillage,
dans lequel le patin (13) est porté par une semelle électriquement isolante (16) qui est fixée au corps de verrouillage (12) et qui recouvre le dispositif de communication radio (17) vers l'extérieur de l'organe de verrouillage (11), ladite semelle électriquement isolante (16) étant perméable aux ondes radio,
et dans lequel ledit contact électrique (19) est porté par un support électriquement isolant (18) qui est fixé à la gâche (9) et qui recouvre l'interface de communication radio courte portée (20) vers la zone de réception (10) définie par la gâche, ledit support électriquement isolant (18) étant perméable aux ondes radio.

9. Cycle (1) pour un système selon l'une quelconque des revendications précédentes, comportant :
- un dispositif électrique (42),
- un organe de verrouillage (11) ayant un corps de verrouillage (12) et un patin (13) de contact électrique relié au dispositif électrique (42) du cycle, l'organe de verrouillage étant adapté pour s'engager selon une direction d'engagement (X) dans une zone de réception (10) d'une gâche (9) appartenant à un poste de verrouillage (7), ledit corps de verrouillage (12) étant électriquement conducteur et relié au dispositif électrique (42) du cycle de façon que ledit dispositif électrique (42) du cycle puisse être alimenté électriquement par l'intermédiaire dudit patin (13) et dudit corps de verrouillage (12) lorsque le cycle (1) est verrouillé au poste de verrouillage (7).

10. Cycle selon la revendication 9, dans lequel le corps de verrouillage (12) présente une face externe (12c) qui est disposée vers le poste de verrouillage (7) lorsque le cycle (1) est verrouillé audit poste de verrouillage (7), ladite face externe (12c) s'étendant sur une certaine largeur (L) perpendiculairement à la direction d'engagement (X), et le patin (13) de l'organe de verrouillage s'étendant sur une majeure partie de ladite largeur (L).

11. Cycle selon la revendication 9 ou la revendication 10, dans lequel le patin (13) de l'organe de verrouillage est porté par une semelle (16) électriquement isolante qui est fixée au corps de verrouillage (12).

12. Cycle selon la revendication 11, dans lequel l'organe de verrouillage (11) du cycle comporte un dispositif de communication radio (17) qui est décalé par rapport au patin (13) selon la direction d'engagement (X) et qui est recouvert par la semelle (16) électriquement isolante vers l'extérieur de l'organe de verrouillage, ladite semelle (16) électriquement isolante étant perméable aux ondes radio.

13. Poste de verrouillage (7) pour un système selon l'une quelconque des revendications 1 à 8, comportant :
-- une structure incluant une gâche (9) ouverte selon une direction d'engagement (X) et définissant une zone de réception (10) adaptée pour recevoir un organe de verrouillage (11) d'un cycle (1) par emboîtement dans ladite direction d'engagement (X),
-- un organe de blocage (24) mobile entre d'une part, une position verrouillée où ledit organe de blocage (24) est adapté pour bloquer l'organe de verrouillage (11) du cycle dans la gâche (9) et d'autre part, une position déverrouillée où l'organe de blocage (24) est adapté pour permettre à l'organe de verrouillage (11) du cycle d'entrer et sortir de la gâche (9) dans la direction d'engagement (X),
-- un mécanisme de commande (26) adapté pour commander l'organe de blocage (24),
-- un circuit d'alimentation électrique (32) adapté pour alimenter électriquement le cycle (1) lorsque l'organe de verrouillage (11) du cycle est bloqué dans la gâche (9) du poste de verrouillage, le circuit d'alimentation électrique (32) ayant un premier pôle (32a) et un deuxième pôle (32b), le premier pôle (32a) étant relié électriquement à un contact électrique (19) disposé pour être en appui sur un patin (13) de l'organe de verrouillage (11) lorsque le cycle (1) est verrouillé au poste de verrouillage (7),
dans lequel la gâche (9) est électriquement conductrice et est reliée électriquement au deuxième pôle (32b) du circuit d'alimentation électrique (32) , la gâche (9) étant disposée pour être en contact avec l'organe de verrouillage (11) lorsque le cycle (11) est verrouillé au poste de verrouillage (7).

14. Poste de verrouillage (7) selon la revendication 13, dans lequel l'organe de blocage (24) est également électriquement conducteur et est relié électriquement au deuxième pôle (32b) du circuit d'alimentation électrique (32).

15. Poste de verrouillage (7) selon l'une quelconque des revendications 13 et 14, dans lequel ledit contact électrique (19) fait saillie dans ladite zone de réception (10) et est sollicité élastiquement vers ladite zone de réception.

16. Poste de verrouillage (7) selon l'une quelconque des revendications 13 à 15, dans lequel ledit contact électrique (19) est porté par un support électriquement isolant (18) fixé à la gâche (9).

17. Poste de verrouillage selon la revendication 16, dans lequel la gâche (9) comporte une interface de communication radio courte portée (20), le support électriquement isolant (18) recouvrant l'interface de communication radio courte portée (20) vers la zone de réception (10) définie par la gâche, ledit support électriquement isolant (18) étant perméable aux ondes radio.
